# EUROPEAN PATENT SPECIFICATION

(11) **EP 3 200 127 B1**
(45) Date of publication and mention of the grant of the patent: **03.08.2022**
(21) Application number: 17152989.4
(22) Date of filing: 25.01.2017
(51) Int. Cl.: G06K 9/00

(54) **METHOD AND DEVICE FOR FINGERPRINT RECOGNITION**
VERFAHREN UND VORRICHTUNG ZUR FINGERABDRUCKERKENNUNG
PROCÉDÉ ET DISPOSITIF DE RECONNAISSANCE D'EMPREINTES DIGITALES

(30) Priority: 01.02.2016 CN 201610068890; 06.04.2016 CN 201610210599
(43) Date of publication of application: 02.08.2017
(73) Proprietor: Beijing Xiaomi Mobile Software Co., Ltd., Beijing 100085 (CN)
(72) Inventor: JI, Chuanshun, Beijing 100085 (CN); DU, Hui, Beijing 100085 (CN); WANG, Qiang, Beijing 100085 (CN)
(74) Representative: Hughes, Andrea Michelle

(56) References cited:
- EP-A2- 0 924 123
- WO-A1-02/35479

## Description

### TECHNICAL FIELD

The present disclosure generally relates to computer technologies, and more particularly, to a method and device for fingerprint recognition.

### BACKGROUND

With continuous development of fingerprint recognition technologies, most mobile terminals such as smart phones have the fingerprint recognition function, and this is very convenient for users to use the mobile terminals.

In related arts, the fingerprint recognition function can be realized based on a fingerprint template database, fingerprint recognition software and a fingerprint sensor. The fingerprint template database stores fingerprint templates input by a user, and each template represents a fingerprint image of one finger. During the fingerprint recognition, the fingerprint sensor captures a fingerprint image of the user, and the fingerprint recognition software matches the fingerprint image against the fingerprint templates in the template database; if this produces a successful match, information indicating the successful match can be returned.

### SUMMARY

Embodiments of the present disclosure provide a method and device for fingerprint recognition. The technical solutions are as follows.

According to a first aspect of embodiments of the present disclosure, there is provided a method for fingerprint recognition, including:
acquiring one or more recognition records each indicating a fingerprint template of at least two previously stored fingerprint templates which successfully matches an input fingerprint every time when fingerprint recognition is performed;
re-ranking the at least two fingerprint templates according to the recognition records; and
after receiving a new input fingerprint, matching the new input fingerprint against the at least two fingerprint templates in an order in which the at least two fingerprint templates are re-ranked.

According to an embodiment, the re-ranking the at least two fingerprint templates according to the recognition records includes:
determining a most recent successful matching fingerprint template according to the recognition records; and
giving the highest ranking to the most recent successful matching fingerprint template in the at least two fingerprint templates.

According to an embodiment, the re-ranking the at least two fingerprint templates according to the recognition records includes:
calculating the number of successful matches for each of the at least two fingerprint templates according to the recognition records; and
ranking the at least two fingerprint templates in a descending order of the numbers of the successful matches.

According to an embodiment, the ranking the at least two fingerprint templates in a descending order of the numbers of the successful matches includes:
if the numbers of the successful matches for two or more of the at least two fingerprint templates are the same, ranking the two or more fingerprint templates in an order of times of most recent successful matches for the two or more fingerprint templates, from most recent to oldest.

According to a second aspect of embodiments of the present disclosure, there is provided a device for fingerprint recognition, including:
a record acquisition module configured to acquire one or more recognition records each indicating a fingerprint template of at least two previously stored fingerprint templates which successfully matches an input fingerprint every time when fingerprint recognition is performed;
a ranking module configured to re-rank the at least two fingerprint templates according to the recognition records; and
a matching module configured to, after a new input fingerprint is received, match the new input fingerprint against the at least two fingerprint templates in an order in which the at least two fingerprint templates are re-ranked.

According to an embodiment, the ranking module includes:
a determination sub-module configured to determine a most recent successful matching fingerprint template according to the recognition records; and
a ranking sub-module configured to give the highest ranking to the most recent successful matching fingerprint template in the at least two fingerprint templates.

According to an embodiment, the ranking module includes:

[deleted]

[deleted].

According to another aspect of the present disclosure, there is provided a program product having stored therein instructions that, when executed by one or more processors of a fingerprint recognition device of a mobile terminal, causes the fingerprint recognition device to perform the method of claim 1.

According to another aspect of the present disclosure, there is provided a computer program, which when executing on a processor of a fingerprint recognition device of a mobile terminal, performs the method of claim 1.

The technical solutions provided by embodiments of the present disclosure can have the following advantageous effects.

The technical solutions of the present disclosure perform matching against the fingerprint templates according to historical successful matches, give the highest ranking to the most frequently used or most recently used fingerprint template, and thus can give priority to the most frequently used fingerprint template when subsequent fingerprint recognition is performed. Thus, the technical solutions can result in reduced time and increased speed for fingerprint recognition and thereby improved user experience.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart of a method for fingerprint recognition according to an exemplary embodiment.
Fig. 2 is a flow chart of a method for fingerprint recognition described by way of background.
Fig. 3 is a flow chart of a method for fingerprint recognition described by way of background.
Fig. 4 is a block diagram of a device for fingerprint recognition according to an exemplary embodiment.
Fig. 5 is a block diagram of a device for fingerprint recognition according to another exemplary embodiment.
Fig. 6 is a block diagram of a device according to an exemplary embodiment.

Exemplary embodiments of the present disclosure are presented by the above drawings, and more detailed descriptions will be made below. The drawings and literal descriptions are for illustrating the idea of the present disclosure to one of ordinary skill in this art with some exemplary embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

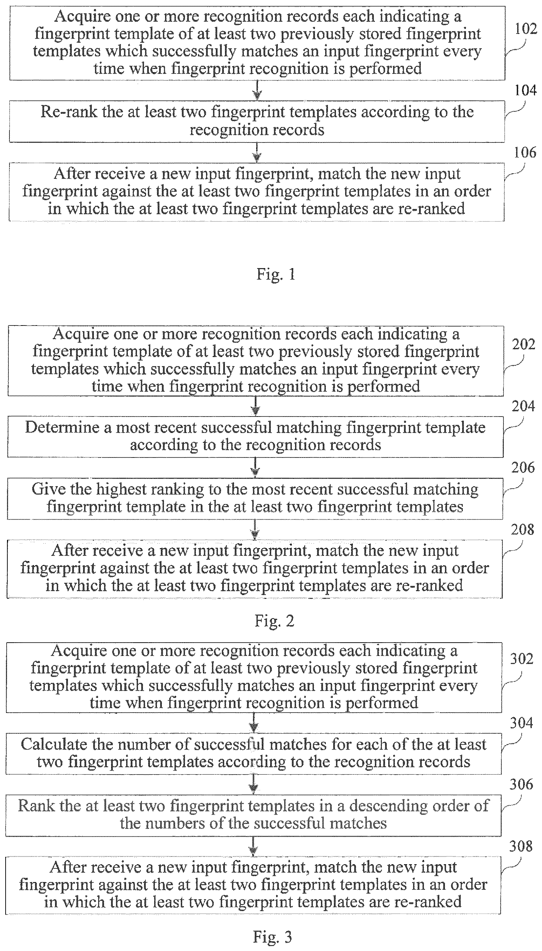

Fig. 1 is a flow chart of a method for fingerprint recognition according to an exemplary embodiment. The method for fingerprint recognition can be applied in electronic devices having the fingerprint recognition function, for example, smart phones, tablet computers, ebook readers, smart wearable devices and so on. The method for fingerprint recognition can include the following steps.

In step 102, one or more recognition records are acquired. Each of the recognition records indicates a fingerprint template of at least two previously stored fingerprint templates which successfully matches input fingerprints when fingerprint recognition is performed, wherein each of the recognition records includes time of the successful match, an identifier indicating the success of the match, and an identifier indicating the matching fingerprint template.

In step 104, the at least two fingerprint templates are re-ranked according to the recognition records.

In step 106, after a new input fingerprint is received, matching of the new input fingerprint against the at least two fingerprint templates is performed in an order in which the at least two fingerprint templates are re-ranked.

In view of the above, the method for fingerprint recognition provided by embodiments of the present invention as defined by the claims, performs matching against the fingerprint templates according to historical successful matches, gives the highest ranking to the most frequently used fingerprint template, and thus can give priority to the most frequently used fingerprint template when subsequent fingerprint recognition is performed. Thus, the method can result in reduced time and increased speed for fingerprint recognition and thereby improved user experience.

The present disclosure proposes a method for fingerprint recognition in which the fingerprint recognition is optimized using a most frequently used algorithm. After each successful recognition, the algorithm re-ranks the fingerprint templates in a database, and the most frequently used template can receive the highest ranking. Thus, when a user performs subsequent recognition, the recognition can be finished by performing matching against the most frequently used fingerprint for a fairly small number of times. The process for the fingerprint recognition optimized using the most frequently used algorithm will be described under two situations.

Fig. 2 is a flow chart of a method for fingerprint recognition described by way of background only. The method for fingerprint recognition can be applied in electronic devices having the fingerprint recognition function, for example, smart phones, tablet computers, ebook readers, smart wearable devices and so on. The method for fingerprint recognition can include the following steps.

In step 202, one or more recognition records are acquired. Each of the recognition records indicates a fingerprint template of at least two previously stored fingerprint templates which successfully matches an input fingerprint when fingerprint recognition is performed.

An electronic device having the fingerprint recognition function can collect an input fingerprint by a fingerprint collection unit, and then match the collected input fingerprint against at least one previously set fingerprint template; if the input fingerprint successfully matches one of the previously set fingerprint templates, it can be determined that the user inputs the correct fingerprint; and if the matching of the input fingerprint against all the previously set fingerprint templates fails, it can be determined that the user inputs the wrong fingerprint.

Every time after the electronic device matches the collected input fingerprint against the at least one previously set fingerprint template, the electronic device can generate and store one piece of recognition record according to the match result. For example, for a successful match, the generated recognition record can include the time of the match, an identifier indicating the success of the match, and an identifier indicating the matching fingerprint template; for a failed match, the generated recognition record can include the time of the match and an identifier indicating the failure of the match.

Alternatively, the electronic device can set one successful recognition record for each fingerprint template, and separately set one failed recognition record for a failed match. For example, every time after the electronic device matches the collected input fingerprint against the at least one previously set fingerprint template, if the collected input fingerprint successfully matches one of the previously set fingerprint templates, the time of the match is added into a successful recognition record corresponding to the matching fingerprint template; and if the collected input fingerprint cannot match any one of the previously set fingerprint templates, the time of the match is added into a failed recognition record.

In step 204, a most recent successful matching fingerprint template is determined according to the recognition records.

For example, if every time after the electronic device matches the collected input fingerprint against the at least one previously set fingerprint template, the electronic device generates and stores one recognition record according to the match result, then the electronic device can acquire the recognition record generated when a most recent successful match is produced, and determine the successful matching fingerprint template included in the recognition record as the most recent successful matching fingerprint template. Under such condition, in the above step 202, during the acquisition of the recognition records, the electronic device can only acquire the recognition record generated when the most recent successful match is produced.

Alternatively, if the electronic device sets one successful recognition record for each fingerprint template, and separately sets one failed recognition record for a failed match, the electronic device can, for the successful recognition record corresponding to each fingerprint template, acquire the time of the most recent recognition from the successful recognition record, and determine the fingerprint template corresponding to the time of the recognition among the obtained times which is closest to the current time as the most recent successful matching fingerprint template.

In step 206, the highest ranking is given to the most recent successful matching fingerprint template in the at least two fingerprint templates.

In this method, described for background only, the above steps 202 to 206 can be performed after an input fingerprint successfully matches a fingerprint template. That is, every time after the user inputs the fingerprint and a successful match is produced, the electronic device can give the highest ranking to the fingerprint template corresponding to the successful match among the fingerprint templates (that is, the fingerprint template corresponding to the successful match is ranked as the top one template).

In step 208, after a new input fingerprint is received, matching of the new input fingerprint against the at least two fingerprint templates is performed in an order in which the at least two fingerprint templates are re-ranked.

During the matching of the new input fingerprint against the at least two fingerprint templates in order, the electronic device determines whether a successful match is produced every time after matching is performed against one fingerprint template; if a failed match occurs, the electronic device matches the new input fingerprint against another fingerprint template; and if a successful match occurs, a match result indicating the successful match is output, and the matching procedure is stopped.

[deleted].

[deleted].

In view of the above, the method of the invention performs matching against the fingerprint templates according to historical successful matches, gives the highest ranking to the most frequently used fingerprint template, and thus can give priority to the most frequently used fingerprint template when subsequent fingerprint recognition is performed. Thus, the method can result in reduced time and increased speed for fingerprint recognition and thereby improved user experience.

Fig. 3 is a flow chart of a method for fingerprint recognition described by way of background. The method for fingerprint recognition can be applied in electronic devices having the fingerprint recognition function, for example, smart phones, tablet computers, ebook readers, smart wearable devices and so on. The method for fingerprint can include the following steps.

In step 302, one or more recognition records are acquired. Each of the recognition records indicates a fingerprint template of at least two previously stored fingerprint templates which successfully matches an input fingerprint when fingerprint recognition is performed.

The electronic device can generate and store the recognition records using the above-mentioned methods. The description about step 202 in the embodiment corresponding to Fig. 2 can also apply in this embodiment, and repeated descriptions are omitted.

In step 304, the number of successful matches for each of the at least two fingerprint templates is calculated according to the recognition records.

If every time after the electronic device matches the collected input fingerprint against at least one previously set fingerprint template, the electronic device generates and stores one piece of recognition record according to the match result, then the electronic device can perform statistics on the obtained recognition records to acquire the number of successful matches for each fingerprint template. In actual application situations, users' usage habits may vary at different time periods. For example, a user may be accustomed to unlocking the electronic device using his/her forefinger for a long previous time period, and the corresponding fingerprint template is the fingerprint template of the user's forefinger; in a relatively recent time period, the user may be accustomed to unlocking the electronic device using his/her thumb, the corresponding fingerprint template is the fingerprint template of the user's thumb; in a most recent time period, another user uses the electronic device, and the corresponding fingerprint template is the fingerprint template of the another user. It can be seen that the fingerprint template which the user gets used to has timeliness. In light of this, in embodiments of the present disclosure, if every time after the electronic device matches the collected input fingerprint against the at least one previously set fingerprint template, the electronic device generates and stores one recognition record according to the match result, then in order to acquire the recognition records in step 302, the electronic device can only acquire the recognition records within a preset time period before the current time. For example, the electronic device can acquire the recognition records which are generated and stored in a week before the current time, and accordingly the electronic device can only store the recognition records within the preset time period before the current time.

Alternatively, if the electronic device sets one successful recognition record for each fingerprint template, and separately sets of failed recognition record for a failed match, the electronic device can take the number of all previous recognition times in a successful recognition record corresponding to each fingerprint template as the number of the successful matches corresponding to the fingerprint template. In addition, the fingerprint template which the user gets used to has timeliness, and thus in embodiments of the present disclosure, in the situation that the electronic device sets one successful recognition record for each fingerprint template, the electronic device can only maintain the recognition times within a preset time period before the current time in the successful recognition record corresponding to each fingerprint template, and delete the recognition times outside the preset time period.

In step 306, the at least two fingerprint templates are ranked in a descending order of the numbers of the successful matches.

For example, the electronic device can give the highest ranking to the fingerprint template which has the biggest number of successful matches, as determined according to the obtained recognition records, and give the next highest ranking to the fingerprint template which has the second biggest number of successful matches, and so on.

If the numbers of the successful matches for two or more of the at least two fingerprint templates are the same, the two or more fingerprint templates are ranked in an order of times of most recent successful matches for the two or more fingerprint templates, from most recent to oldest.

For example, if the electronic device determines that there are two fingerprint of successful matches according to the obtained recognition records, the electronic device can obtain the times of the most recent successful matches for the fingerprint templates 1 and 2. If the time of the most recent successful match for the fingerprint template 1 is two hours ago, and the time of the most recent successful match for the fingerprint template 2 is twenty-four hours ago, it can be seen that the time of the most recent successful match for the fingerprint template 1 is closer to the current time than the fingerprint template 2, and then the electronic device can give the highest ranking to the fingerprint template 1, and give the second highest ranking to the fingerprint template 2.

In step 308, after a new input fingerprint is received, the matching of the new input fingerprint against the at least two fingerprint templates is performed in an order in which the at least two fingerprint templates are re-ranked.

[deleted].

In some embodiments, the input times of templates are different in the fingerprint template database, some fingerprint templates which are input late in time may be used very frequently, but the total numbers of successful matches corresponding to these templates may not as large as those templates which are input early in time. In light of this, in embodiments of the present disclosure, when re-ranking these templates, the electronic device calculates the frequencies of the successful matches for each of the at least two fingerprint templates, and re-ranks the at least two fingerprint templates in a descending order of the frequencies of successful matches. Further, if the frequencies of successful matches corresponding to two or more of fingerprint templates are the same, the two or more fingerprint templates are ranked in an order of times of most recent successful matches for the two or more fingerprint templates, from most recent to oldest.

For example, the recognition records obtained by the electronic device can also indicate the time of each fingerprint recognition. According to the time of each fingerprint recognition, and the fingerprint template of at least two fingerprint templates which matches an input fingerprint every time the fingerprint recognition is performed, the electronic device can calculate the frequency of success corresponding to each of the at least two fingerprint templates, and rank the at least two fingerprint templates in a descending order of the frequencies of successful matches corresponding to individual ones of the at least two fingerprint templates. That is, the recognition records obtained by the electronic device also include times of previous fingerprint matching. For each fingerprint template, in addition to determination of the number of successful matches corresponding to the fingerprint template according to the obtained recognition records, the electronic device can further obtain the time of the first successful match and the time of the most recent successful match corresponding to the fingerprint template in the obtained recognition record, calculate the time interval between the time of the first successful match and the time of the most recent successful match corresponding to the fingerprint template, and calculate the frequency of success corresponding to the fingerprint template according to the number of successful matches corresponding to the fingerprint template and the time interval between the time of the first successful match and the time of the most recent successful match corresponding to the fingerprint template, and finally the electronic device can re-rank the at least two fingerprint templates in a descending order of the frequencies of successful matches.

For example, there are three fingerprint templates in the electronic device, i.e., a fingerprint template 1, a fingerprint template 2, and a fingerprint template 3. The time of the first successful match of the fingerprint template 1 is two hundred days ago, the time of the last successful match of the fingerprint template 1 is twenty days ago, and the number of (all previous) successful matches is three hundred and sixty. The time of the first successful match of the fingerprint template 2 is one hundred days ago, the time of the last successful match of the fingerprint template 2 is thirty days ago, and the number of (all previous) successful matches is two hundred and eighty. The time of the first successful match of the fingerprint template 3 is ten days ago, the time of the last successful match of the fingerprint template 3 is the current day, and the number of successful matches is one hundred. Then, the electronic device can perform calculations to determine that the frequency of success corresponding to the fingerprint template 1 is two times per day, the frequency of success corresponding to the fingerprint template 2 is four times per day and the frequency of success corresponding to the fingerprint template 3 is ten times per day. The electronic device can rank the three fingerprint templates in an order of the fingerprint template 3, the fingerprint template 2 and the fingerprint template 1.

In view of the above, in the method for fingerprint recognition provided by embodiments of the present disclosure, one or more recognition records are acquired, and each of the records indicates a fingerprint template of at least two previously stored fingerprint templates which successfully matches an input fingerprint when fingerprint recognition is performed; the at least two fingerprint templates are re-ranked according to the recognition records; after a new input fingerprint is received, matching of the new input fingerprint against the at least two fingerprint templates is performed in an order in which the at least two fingerprint templates are re-ranked. The method performs matching against the fingerprint templates according to historical successful matches, gives the highest ranking to the most frequently used fingerprint template, and thus can give priority to the most frequently used fingerprint template when subsequent fingerprint recognition is performed. Thus, the method can result in reduced time and increased speed for fingerprint recognition and thereby improved user experience.

In the above embodiments of the present disclosure, the fingerprint templates in the fingerprint template database are ranked using the most frequently used algorithm, every time after a successful match occurs, the fingerprint template corresponding to a finger which is most frequently used by a user receives the highest ranking. When the user uses his/her frequently used finger to perform recognition next time, the recognition can be finished only by very small number of matches. The above methods provided by embodiments of the present disclosure can effectively reduce the time for fingerprint matching during fingerprint recognition, increase the whole performance and thereby improve user experience.

The following are the embodiments of devices of the present disclosure. The devices can be used to perform the embodiments of the methods of the present disclosure. Details which are not disclosed when describing the embodiments of the devices of the present disclosure can be found in the above descriptions about the embodiments of the methods.

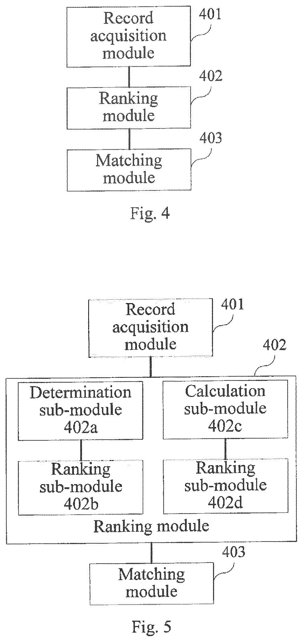

Fig. 4 is a block diagram of a device for fingerprint recognition according to an exemplary embodiment. The device for fingerprint recognition can be realized as whole or a part of an electronic device having a fingerprint recognition function by software, hardware or a combination thereof. For example, the electronic device can be a smart phone, a tablet computer, an ebook reader, a smart wearable device and so on. The fingerprint recognition device includes a record acquisition module 401, a ranking module 402 and a matching module 403.

The record acquisition module 401 is configured to acquire recognition records each indicating a fingerprint template of at least two previously stored fingerprint templates which successfully matches an input fingerprint when fingerprint recognition is performed.

The ranking module 402 is configured to re-rank the at least two fingerprint templates according to the recognition records.

The matching module 403 is configured to, after a new input fingerprint is received, match the new input fingerprint against the at least two fingerprint templates in an order in which the at least two fingerprint templates are re-ranked.

In view of the above, in the device for fingerprint recognition provided by embodiments of the present disclosure, one or more recognition records are acquired, and each of the records indicates a fingerprint template of at least two previously stored fingerprint templates which successfully matches an input fingerprint when fingerprint recognition is performed; the at least two fingerprint templates are re-ranked according to the recognition records; after a new input fingerprint is received, matching of the new input fingerprint against the at least two fingerprint templates is performed in an order in which the at least two fingerprint templates are re-ranked. The method performs matching against the fingerprint templates according to historical successful matches, gives the highest ranking to the most frequently used fingerprint template, and thus gives priority to the most frequently used fingerprint template when subsequent fingerprint recognition is performed. Thus, the method can result in reduced time and increased speed for fingerprint recognition and thereby improved user experience.

Fig. 5 is a block diagram of a device for fingerprint recognition shown for background purposes only. The device for fingerprint recognition can be realized as whole or a part of an electronic device having a fingerprint recognition function by software, hardware or a combination thereof. For example, the electronic device can be a smart phone, a tablet computer, an ebook reader, a smart wearable device and so on. The fingerprint recognition device includes a record acquisition module 401, a ranking module 402 and a matching module 403.

The record acquisition module 401 is configured to acquire recognition records each indicating a fingerprint template of at least two previously stored fingerprint templates which successfully matches an input fingerprint when fingerprint recognition is performed.

The ranking module 402 is configured to re-rank the at least two fingerprint templates according to the recognition records.

The matching module 403 is configured to, after a new input fingerprint is received, match the new input fingerprint against the at least two fingerprint templates in an order in which the at least two fingerprint templates are re-ranked.

In the device, the ranking module 402 includes a determination sub-module 402a and a ranking sub-module 402b.

The determination sub-module 402a is configured to determine a most recent successful matching fingerprint template according to the recognition records.

The ranking sub-module 402b is configured to give the highest ranking to the most recent successful matching fingerprint template in the at least two fingerprint templates.

The ranking module 402 includes a calculation sub-module 402c and a ranking sub-module 402d.

The calculation sub-module 402c is configured to calculate the number of successful matches for each of the at least two fingerprint templates according to the recognition records.

The ranking sub-module 402d is configured to rank the at least two fingerprint templates in a descending order of the numbers of the successful matches.

The ranking sub-module 402d is further configured to, if the numbers of the successful matches for two or more of the at least two fingerprint templates are the same, rank the two or more fingerprint templates.

The recognition records also indicate the time of each fingerprint recognition. The ranking module 402 includes a frequency calculation sub-module.

The frequency calculation sub-module is configured to calculate the frequency of success corresponding to each of the at least two fingerprints according to the time of each fingerprint recognition and the fingerprint template of at least two fingerprint templates which matches an input fingerprint when the fingerprint recognition is performed every time.

The ranking sub-module 402d is further configured to rank the at least two fingerprint templates in a descending order of the frequencies of success corresponding to individual ones of the at least two fingerprint templates as calculated by the frequency calculation sub-module.

In view of the above, in the device for fingerprint recognition d, one or more recognition records are acquired, and each of the records indicates a fingerprint template of at least two previously stored fingerprint templates which successfully matches an input fingerprint when fingerprint recognition is performed; the at least two fingerprint templates are re-ranked according to the recognition records; after a new input fingerprint is received, matching of the new input fingerprint against the at least two fingerprint templates is performed in an order in which the at least two fingerprint templates are re-ranked. The method performs matching against the fingerprint templates according to historical successful matches, gives the highest ranking to the most frequently used fingerprint template, and thus can give priority to the most frequently used fingerprint template when subsequent fingerprint recognition is performed. Thus, the method can result in reduced time and increased speed for fingerprint recognition and thereby improved user experience.

An exemplary embodiment of the present disclosure further provides a device for fingerprint recognition which can realize the above methods for fingerprint recognition provided by the above embodiments. The device includes a processor and a memory for storing instructions executable by the processor.

The processor is configured to perform the method as defined by the claims.

[deleted]..

[deleted].

[deleted].

With respect to the devices in the above embodiments, the specific manners for performing operations by individual modules have been described in detail in the embodiments regarding the methods, which will not be elaborated herein.

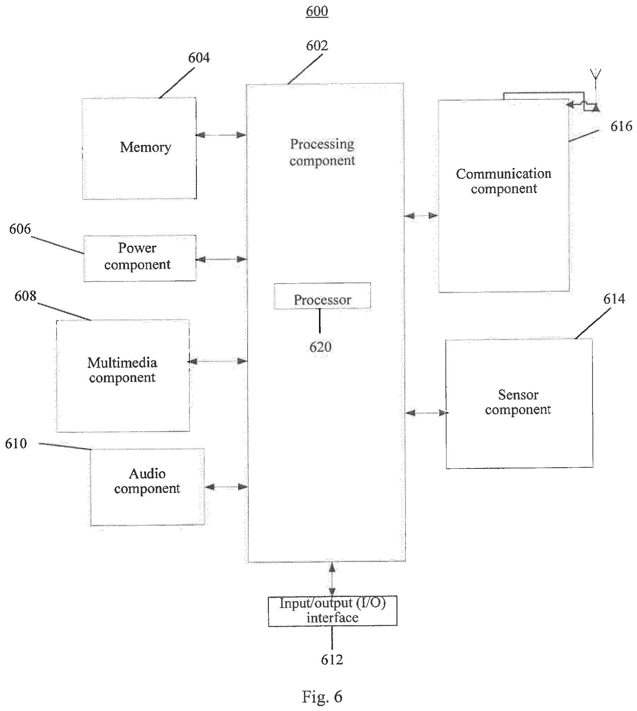

Fig. 6 is a block diagram of a device 600 according to an exemplary embodiment. For example, the device 600 may be a mobile phone, a computer, a digital broadcast terminal, a messaging device, a gaming console, a tablet, a medical device, exercise equipment, a personal digital assistant, and the like.

Referring to Fig. 6, the device 600 may include one or more of the following components: a processing component 602, a memory 604, a power component 606, a multimedia component 608, an audio component 610, an input/output (I/O) interface 612, a sensor component 614, and a communication component 616.

The processing component 602 typically controls overall operations of the device 600, such as the operations associated with display, telephone calls, data communications, camera operations, and recording operations. The processing component 602 may include one or more processors 620 to execute instructions to perform all or part of the steps in the above described methods. Moreover, the processing component 602 may include one or more modules which facilitate the interaction between the processing component 602 and other components. For instance, the processing component 602 may include a multimedia module to facilitate the interaction between the multimedia component 608 and the processing component 602.

The memory 604 is configured to store various types of data to support the operation of the device 600. Examples of such data include instructions for any applications or methods operated on the device 600, contact data, phonebook data, messages, pictures, video, etc. The memory 604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 606 provides power to various components of the device 600. The power component 606 may include a power management system, one or more power sources, and any other components associated with the generation, management, and distribution of power in the device 600.

The multimedia component 608 includes a screen providing an output interface between the device 600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 608 includes a front camera and/or a rear camera. The front camera and the rear camera may receive an external multimedia datum while the device 600 is in an operation mode, such as a photographing mode or a video mode. Each of the front camera and the rear camera may be a fixed optical lens system or have focus and optical zoom capability.

The audio component 610 is configured to output and/or input audio signals. For example, the audio component 610 includes a microphone ("MIC") configured to receive an external audio signal when the device 600 is in an operation mode, such as a call mode, a recording mode, and a voice recognition mode. The received audio signal may be further stored in the memory 604 or transmitted via the communication component 616. In some embodiments, the audio component 610 further includes a speaker to output audio signals.

The I/O interface 612 provides an interface between the processing component 602 and peripheral interface modules, such as a keyboard, a click wheel, buttons, and the like. The buttons may include, but are not limited to, a home button, a volume button, a starting button, and a locking button.

The sensor component 614 includes one or more sensors to provide status assessments of various aspects of the device 600. For instance, the sensor component 614 may detect an open/closed status of the device 600, relative positioning of components, e.g., the display and the keypad, of the device 600, a change in position of the device 600 or a component of the device 600, a presence or absence of user contact with the device 600, an orientation or an acceleration/deceleration of the device 600, and a change in temperature of the device 600. The sensor component 614 may include a proximity sensor configured to detect the presence of nearby objects without any physical contact. The sensor component 614 may also include a light sensor, such as a CMOS or CCD image sensor, for use in imaging applications. In some embodiments, the sensor component 614 may also include an accelerometer sensor, a gyroscope sensor, a magnetic sensor, a pressure sensor, or a temperature sensor.

The communication component 616 is configured to facilitate communication, wired or wirelessly, between the device 600 and other devices. The device 600 can access a wireless network based on a communication standard, such as WiFi, 2G, or 3G, or a combination thereof. In one exemplary embodiment, the communication component 616 receives a broadcast signal or broadcast associated information from an external broadcast management system via a broadcast channel. In one exemplary embodiment, the communication component 616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as the memory 604 including instructions executable by the processor 620 in the device 600, for performing the above-described methods. For example, the non-transitory computer-readable storage medium may be a ROM, a RAM, a CD-ROM, a magnetic tape, a floppy disc, an optical data storage device, and the like.

A non-transitory computer-readable storage medium having stored therein instructions that, when executed by a processor of a device 600, causes the device 600 to perform above method for fingerprint recognition as described in connection with any one of Figs. 1 to 3.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for fingerprint recognition in a mobile terminal, comprising:
collecting, via a fingerprint collection unit of the mobile terminal, an input fingerprint of a user;
comparing the fingerprint with a highest-ranked previously stored fingerprint template and determining whether a successful match has occurred;
if a failed match occurs comparing a next-highest-ranked previously stored fingerprint template, wherein the highest-ranked previously stored fingerprint template and the next-highest-ranked previously stored fingerprint template are previously stored templates which are highest ranked and next-highest ranked according to descending order of frequencies of successful matches;
creating (102, 202, 302) recognition records for at least two previously stored fingerprint templates, wherein the at least two previously stored fingerprint templates successfully match input fingerprints when fingerprint recognition is performed, wherein each of the recognition records includes time of the successful match, an identifier indicating the success of the match, and an identifier indicating the matching fingerprint template;
re-ranking (104) the at least two fingerprint templates according to descending order of frequencies of successful matches defined by the recognition records for the at least two fingerprint templates; and
after receiving a new input fingerprint, matching (106, 208, 308) the new input fingerprint against the at least two fingerprint templates in an order in which the at least two fingerprint templates are re-ranked;
wherein the re-ranking (104) and ranking of the at least two fingerprint templates according to descending order of frequencies of successful matches defined by the recognition records for the at least two finger print templates comprises:
calculating frequencies of successful matches for the at least two fingerprint templates; and
re-ranking or ranking the at least two fingerprint templates in a descending order of the frequencies of the frequencies of successful matches; and
wherein the calculating frequencies of successful matches for the at least two fingerprint templates comprises:
calculating a time interval between the time of the first successful match and the time of the most recent successful match corresponding to each of the at least two fingerprint templates, and calculating frequencies of successful matches corresponding to the fingerprint templates by dividing the number of successful matches corresponding to the fingerprint templates by the time interval between the time of the first successful match and the time of the most recent successful match corresponding to the fingerprint templates.

2. A fingerprint recognition device mounted in a mobile terminal, the fingerprint recognition device comprising:
a fingerprint recognition module comprising means for collecting an input fingerprint, comparing the fingerprint with a highest-ranked previously stored fingerprint template and determining whether a successful match has occurred, and if a failed match occurs, comparing a next-highest-ranked previously stored fingerprint template, wherein the highest-ranked previously stored fingerprint template and the next-highest-ranked previously stored fingerprint template are previously stored templates which are highest ranked and next-highest ranked according to descending order of frequencies of successful matches;
a record acquisition module (401) configured to create recognition records for at least two previously stored fingerprint templates, wherein the at least two previously stored fingerprint template successfully match input fingerprints when fingerprint recognition is performed, wherein each of the recognition records includes time of the successful match, an identifier indicating the success of the match, and an identifier indicating the matching fingerprint template;
a ranking module (402) configured to re-rank the at least two fingerprint templates according to descending order of frequencies of successful matches defined by the recognition records for the at least two fingerprint templates; and
a matching module (403) configured to, after a new input fingerprint is received, match the new input fingerprint against the at least two fingerprint templates in an order in which the at least two fingerprint templates are re-ranked;
wherein the ranking module (402) is configured to re-rank and rank the at least two fingerprint templates according to descending order of frequencies of successful matches defined by the recognition records for the at least two finger print templates comprises by being configured to:
calculate frequencies of successful matches for the at least two fingerprint templates; and
re-rank or rank the at least two fingerprint templates in a descending order of the frequencies of the frequencies of successful matches;
wherein the ranking module (402) is configured to calculate the frequencies of successful matches for the at least two fingerprint templates by being configured to:
calculate a time interval between the time of the first successful match and the time of the most recent successful match corresponding to each of the at least two fingerprint templates, and calculate frequencies of successful matches corresponding to the fingerprint templates by dividing the number of successful matches corresponding to the fingerprint templates by the time interval between the time of the first successful match and the time of the most recent successful match corresponding to the fingerprint templates.

3. A computer program product having stored therein instructions that, when executed by one or more processors of a fingerprint recognition device of a mobile terminal, causes the fingerprint recognition device to perform the method of claim 1.

## Patentansprüche

1. Verfahren zur Fingerabdruckerkennung in einem mobilen Endgerät, umfassend:
Erfassen eines eingegebenen Fingerabdrucks eines Benutzers über eine Fingerabdruckerfassungseinheit des mobilen Endgeräts;
Vergleichen des Fingerabdrucks mit einer höchstgereihten zuvor gespeicherten Fingerabdruckvorlage und Bestimmen, ob eine erfolgreiche Übereinstimmung aufgetreten ist;
falls eine fehlgeschlagene Übereinstimmung auftritt, Vergleichen einer nächsthöchstgereihten zuvor gespeicherten Fingerabdruckvorlage, wobei die höchstgereihte zuvor gespeicherte Fingerabdruckvorlage und die nächsthöchstgereihte zuvor gespeicherte Fingerabdruckvorlage zuvor gespeicherte Vorlagen sind, welche gemäß absteigender Reihenfolge von Häufigkeiten erfolgreicher Übereinstimmungen höchstgereiht und nächsthöchstgereiht sind;
Erstellen (102, 202, 302) von Erkennungsdatensätzen für zumindest zwei zuvor gespeicherte Fingerabdruckvorlagen, wobei die zumindest zwei zuvor gespeicherten Fingerabdruckvorlagen erfolgreich mit eingegebenen Fingerabdrücken übereinstimmen, wenn Fingerabdruckerkennung durchgeführt wird, wobei jeder der Erkennungsdatensätze Zeitpunkt der erfolgreichen Übereinstimmung, einen Identifikator, welcher den Erfolg der Übereinstimmung angibt, und einen Identifikator, welcher die übereinstimmende Fingerabdruckvorlage angibt, beinhaltet;
Neu-Reihen (104) der zumindest zwei Fingerabdruckvorlagen gemäß absteigender Reihenfolge der Häufigkeiten erfolgreicher Übereinstimmungen, welche durch die Erkennungsdatensätze für die zumindest zwei Fingerabdruckvorlagen definiert sind; und
nach Empfangen eines neu eingegebenen Fingerabdrucks, Übereinstimmen (106, 208, 308) des neu eingegebenen Fingerabdrucks mit den zumindest zwei Fingerabdruckvorlagen in einer Reihenfolge, in welcher die zumindest zwei Fingerabdruckvorlagen neu gereiht sind;
wobei das Neu-Reihen (104) und Reihen der zumindest zwei Fingerabdruckvorlagen gemäß absteigender Reihenfolge der Häufigkeiten erfolgreicher Übereinstimmungen, welche durch die Erkennungsdatensätze für die zumindest zwei Fingerabdruckvorlagen definiert sind, umfasst:
Berechnen von Häufigkeiten erfolgreicher Übereinstimmungen für die zumindest zwei Fingerabdruckvorlagen; und
Neu-Reihen oder Reihen der zumindest zwei Fingerabdruckvorlagen in absteigender Reihenfolge der Häufigkeiten der Häufigkeiten erfolgreicher Übereinstimmungen; und
wobei das Berechnen von Häufigkeiten erfolgreicher Übereinstimmungen für die zumindest zwei Fingerabdruckvorlagen umfasst:
Berechnen einer Zeitspanne zwischen dem Zeitpunkt der ersten erfolgreichen Übereinstimmung und dem Zeitpunkt der neuesten erfolgreichen Übereinstimmung, welche jeweils den zumindest zwei Fingerabdruckvorlagen entspricht, und Berechnen von Häufigkeiten erfolgreicher Übereinstimmungen, welche den Fingerabdruckvorlagen entsprechen, durch Dividieren der Anzahl von erfolgreichen Übereinstimmungen, welche den Fingerabdruckvorlagen entsprechen, durch die Zeitspanne zwischen dem Zeitpunkt der ersten erfolgreichen Übereinstimmung und dem Zeitpunkt der neuesten erfolgreichen Übereinstimmung, welche den Fingerabdruckvorlagen entsprechen.

2. Fingerabdruckerkennungsvorrichtung, welche in einem mobilen Endgerät montiert ist, wobei die Fingerabdruckerkennungsvorrichtung umfasst:
ein Fingerabdruckerkennungsmodul, umfassend Mittel zum Erfassen eines eingegebenen Fingerabdrucks, Vergleichen des Fingerabdrucks mit einer höchstgereihten zuvor gespeicherten Fingerabdruckvorlage und Bestimmen, ob eine erfolgreiche Übereinstimmung aufgetreten ist, und falls eine fehlgeschlagene Übereinstimmung auftritt, Vergleichen einer nächsthöchstgereihten zuvor gespeicherten Fingerabdruckvorlage, wobei die höchstgereihte zuvor gespeicherte Fingerabdruckvorlage und die nächsthöchstgereihte zuvor gespeicherte Fingerabdruckvorlage zuvor gespeicherte Vorlagen sind, welche gemäß absteigender Reihenfolge von Häufigkeiten erfolgreicher Übereinstimmungen höchstgereiht und nächsthöchstgereiht sind;
ein Datensatzaneignungsmodul (401), welches konfiguriert ist, um Erkennungsdatensätze für zumindest zwei zuvor gespeicherte Fingerabdruckvorlagen zu erstellen, wobei die zumindest zwei zuvor gespeicherten Fingerabdruckvorlagen erfolgreich mit eingegebenen Fingerabdrücken übereinstimmen, wenn Fingerabdruckerkennung durchgeführt wird, wobei jeder der Erkennungsdatensätze Zeitpunkt der erfolgreichen Übereinstimmung, einen Identifikator, welcher den Erfolg der Übereinstimmung angibt, und einen Identifikator, welcher die übereinstimmende Fingerabdruckvorlage angibt, beinhaltet;
ein Reihungsmodul (402), welches konfiguriert ist, um die zumindest zwei Fingerabdruckvorlagen gemäß absteigender Reihenfolge der Häufigkeiten erfolgreicher Übereinstimmungen, welche durch die Erkennungsdatensätze für die zumindest zwei Fingerabdruckvorlagen definiert sind, neu zu reihen; und
ein Übereinstimmungsmodul (403), welches konfiguriert ist, um nachdem ein neu eingegebener Fingerabdruck empfangen wurde, den neu eingegebenen Fingerabdruck mit den zumindest zwei Fingerabdruckvorlagen in einer Reihenfolge übereinzustimmen, in welcher die zumindest zwei Fingerabdruckvorlagen neu gereiht sind;
wobei das Reihungsmodul (402) konfiguriert ist, die zumindest zwei Fingerabdruckvorlagen gemäß absteigender Reihenfolge der Häufigkeiten erfolgreicher Übereinstimmungen, welche durch die Erkennungsdatensätze für die zumindest zwei Fingerabdruckvorlagen definiert sind, neu zu reihen und zu reihen, umfasst, indem es konfiguriert ist, um:
Häufigkeiten erfolgreicher Übereinstimmungen für die zumindest zwei Fingerabdruckvorlagen zu berechnen; und die zumindest zwei Fingerabdruckvorlagen in absteigender Reihenfolge der Häufigkeiten der Häufigkeiten erfolgreicher Übereinstimmungen neu zu reihen oder zu reihen;
wobei das Reihungsmodul (402) konfiguriert ist, um die Häufigkeiten erfolgreicher Übereinstimmungen für die zumindest zwei Fingerabdruckvorlagen zu berechnen, indem es konfiguriert ist, um:
eine Zeitspanne zwischen dem Zeitpunkt der ersten erfolgreichen Übereinstimmung und dem Zeitpunkt der neuesten erfolgreichen Übereinstimmung zu berechnen, welche jeweils den zumindest zwei Fingerabdruckvorlagen entsprechen, und Häufigkeiten erfolgreicher Übereinstimmungen, welche den Fingerabdruckvorlagen entsprechen, durch Dividieren der Anzahl von erfolgreichen Übereinstimmungen, welcher den Fingerabdruckvorlagen entsprechen, durch die Zeitspanne zwischen dem Zeitpunkt der ersten erfolgreichen Übereinstimmung und dem Zeitpunkt der neuesten erfolgreichen Übereinstimmung, welche den Fingerabdruckvorlagen entsprechen, zu berechnen.

3. Computerprogrammprodukt mit darauf gespeicherten Anweisungen, welche, wenn durch einen oder mehrere Prozessoren einer Fingerabdruckerkennungsvorrichtung eines mobilen Endgeräts ausgeführt, die Fingerabdruckerkennungsvorrichtung veranlassen, das Verfahren nach Anspruch 1 auszuführen.

## Revendications

1. Procédé de reconnaissance d'empreintes digitales dans un terminal mobile, comprenant :
la collecte, par le biais d'une unité de collecte d'empreintes digitales du terminal mobile, d'une empreinte digitale d'entrée d'un utilisateur ;
la comparaison de l'empreinte digitale avec un modèle d'empreinte digitale stocké auparavant le mieux classé et la détermination pour savoir si une correspondance réussie s'est produite ;
si une correspondance ratée s'est produite, la comparaison du modèle d'empreinte digitale stocké auparavant le mieux classé suivant, dans lequel le modèle d'empreinte digitale stocké auparavant le mieux classé et le modèle d'empreinte digitale stocké auparavant le mieux classé suivant sont des modèles stockés auparavant qui sont le mieux classé et le mieux classé suivant selon un ordre décroissant de fréquence de correspondances réussies ;
la création (102, 202, 302) d'enregistrements de reconnaissance pour au moins deux modèles d'empreinte digitale stockés auparavant, dans lequel les au moins deux modèles d'empreinte digitale stockés auparavant correspondent avec succès à des empreintes digitales d'entrée lorsqu'une reconnaissance d'empreintes digitales est réalisée, dans lequel chacun des enregistrements de reconnaissance inclut le moment de la correspondance réussie, un identifiant indiquant la réussite de la correspondance et un identifiant indiquant le modèle d'empreinte digitale correspondant ;
le reclassement (104) des au moins deux modèles d'empreinte digitale selon un ordre décroissant de fréquences de correspondances réussies définies par les enregistrements de reconnaissance pour les au moins deux modèles d'empreinte digitale ; et
après la réception d'une nouvelle empreinte digitale d'entrée, la mise en correspondance (106, 208, 308) de la nouvelle empreinte digitale d'entrée avec les au moins deux modèles d'empreinte digitale selon un ordre dans lequel les au moins deux modèles d'empreinte digitale sont reclassés ;
dans lequel le reclassement (104) et le classement des au moins deux modèles d'empreinte digitale selon un ordre décroissant de fréquences de correspondances réussies définies par les enregistrements de reconnaissance pour les au moins deux modèles d'empreinte digitale comprend :
le calcul de fréquences de correspondances réussies pour les au moins deux modèles d'empreinte digitale ; et
le reclassement ou le classement des au moins deux modèles d'empreinte digitale selon un ordre décroissant des fréquences des fréquences de correspondances réussies ; et
dans lequel le calcul de fréquences de correspondances réussies pour les au moins deux modèles d'empreinte digitale comprend :
le calcul d'un intervalle de temps entre le moment de la première correspondance réussie et le moment de la correspondance réussie la plus récente correspondant à chacun des au moins deux modèles d'empreinte digitale et le calcul de fréquences de correspondances réussies correspondant aux modèles d'empreinte digitale en divisant le nombre de correspondances réussies correspondant aux modèles d'empreinte digitale par l'intervalle de temps entre le moment de la première correspondance réussie et le moment de la correspondance réussie la plus récente correspondant aux modèles d'empreinte digitale.

2. Dispositif de reconnaissance d'empreinte digitale monté dans un terminal mobile, le dispositif de reconnaissance d'empreinte digitale comprenant :
un module de reconnaissance d'empreinte digitale comprenant des moyens pour collecter une empreinte digitale d'entrée, pour comparer l'empreinte digitale avec un modèle d'empreinte digitale stocké auparavant le mieux classé et pour déterminer si une correspondance réussie s'est produite et, si une correspondance ratée s'est produite, pour comparer un modèle d'empreinte digitale stocké auparavant le mieux classé suivant, dans lequel le modèle d'empreinte digitale stocké auparavant le mieux classé et le modèle d'empreinte digitale stocké auparavant le mieux classé suivant sont des modèles stockés auparavant qui sont le mieux classé et le mieux classé suivant selon un ordre décroissant de fréquence de correspondances réussies ;
un module d'acquisition d'enregistrement (401) configuré pour créer des enregistrements de reconnaissance pour au moins deux modèles d'empreinte digitale stockés auparavant, dans lequel les au moins deux modèles d'empreinte digitale stockés auparavant correspondent avec succès à des empreintes digitales d'entrée lorsqu'une reconnaissance d'empreintes digitales est réalisée, dans lequel chacun des enregistrements de reconnaissance inclut le moment de la correspondance réussie, un identifiant indiquant la réussite de la correspondance et un identifiant indiquant le modèle d'empreinte digitale correspondant ;
un module de classement (402) configuré pour reclasser les au moins deux modèles d'empreinte digitale selon un ordre décroissant de fréquences de correspondances réussies définies par les enregistrements de reconnaissance pour les au moins deux modèles d'empreinte digitale ; et
un module de mise correspondance (403) configuré pour mettre en correspondance, après qu'une nouvelle empreinte digitale d'entrée est reçue, la nouvelle empreinte digitale d'entrée avec les au moins deux modèles d'empreinte digitale selon un ordre dans lequel les au moins deux modèles d'empreinte digitale sont reclassés ;
dans lequel le module de reclassement (402) est configuré pour reclasser et classer les au moins deux modèles d'empreinte digitale selon un ordre décroissant de fréquences de correspondances réussies définies par les enregistrements de reconnaissance pour les au moins deux modèles d'empreinte digitale comprend en étant configuré :
pour calculer des fréquences de correspondances réussies pour les au moins deux modèles d'empreinte digitale; et pour reclasser ou classer les au moins deux modèles d'empreinte digitale selon un ordre décroissant des fréquences des fréquences de correspondances réussies ;
dans lequel le module de classement (402) est configuré pour calculer les fréquences de correspondances réussies pour les au moins deux modèles d'empreinte digitale en étant configuré :
pour calculer un intervalle de temps entre le moment de la première correspondance réussie et le moment de la correspondance réussie la plus récente correspondant à chacun des au moins deux modèles d'empreinte digitale et pour calculer des fréquences de correspondances réussies correspondant aux modèles d'empreinte digitale en divisant le nombre de correspondances réussies correspondant aux modèles d'empreinte digitale par l'intervalle de temps entre le moment de la première correspondance réussie et le moment de la correspondance réussie la plus récente correspondant aux modèles d'empreinte digitale.

3. Produit-programme d'ordinateur dans lequel sont stockées des instructions qui, lorsqu'elles sont exécutées par un ou plusieurs processeurs d'un dispositif de reconnaissance d'empreinte digitale d'un terminal mobile, amènent le dispositif de reconnaissance d'empreinte digitale à réaliser le procédé selon la revendication 1.
